# EUROPEAN PATENT SPECIFICATION

(11) **EP 2 283 607 B1**
(45) Date of publication and mention of the grant of the patent: **25.07.2012**
(21) Application number: 08760601.8
(22) Date of filing: 05.06.2008
(51) Int. Cl.: H04L 29/06, H04L 12/14

(54) **CHARGING FOR SERVICES IN A COMMUNICATION NETWORK**
VERGEBÜHRUNG FÜR DIENSTE IN EINEM KOMMUNIKATIONSNETZ
FACTURATION DE SERVICES DANS UN RÉSEAU DE COMMUNICATION

(43) Date of publication of application: 16.02.2011
(73) Proprietor: Telefonaktiebolaget L M Ericsson (PUBL), 164 83 Stockholm (SE)
(72) Inventor: SVEDBERG, Johan, S-115 24 Stockholm (SE)
(74) Representative: Mitchell, Matthew Benedict David
(86) International application number: PCT/EP2008/057026
(87) International publication number: WO 2009/146749

(56) References cited:
- WO-A-03/105031
- US-A1- 2004 147 245
- US-A1- 2006 089 999

## Description

### TECHNICAL FIELD

The invention relates to the field of charging for services in a communication network.

### BACKGROUND

The IP Multimedia Subsystem (IMS) is the technology defined by the Third Generation Partnership Project (3GPP) to provide IP Multimedia services over mobile communication networks. IP Multimedia services provide a dynamic combination of voice, video, messaging, data, etc. within the same session.

The IMS makes use of the Session Initiation Protocol (SIP) to set up and control calls or sessions between user terminals. The Session Description Protocol (SDP), carried by SIP signals, is used to describe and negotiate the media components of the session. Whilst SIP was created as a user-to-user protocol, the IMS allows operators and service providers to control user access to services and to charge users accordingly.

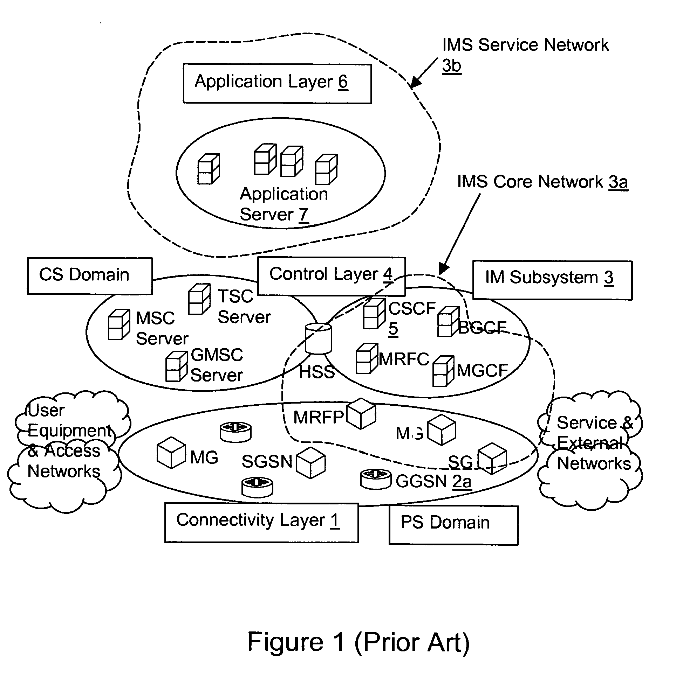

Figure 1 illustrates schematically how the IMS fits into the mobile network architecture in the case of a General Packet Radio Service (GPRS) access network. As shown in Figure 1 control of communications occurs at three layers (or planes). The lowest layer is the Connectivity Layer 1, also referred to as the bearer plane and through which signals are directed to/from user equipment, UE, accessing the network. The entities within the connectivity layer 1 that connect an IMS subscriber to IMS services form a network that is referred to as the IP-Connectivity Access Network, IP-CAN. The GPRS network includes various GPRS Support Nodes (GSNs). A gateway GPRS support node (GGSN) 2 acts as an interface between the GPRS backbone network and other networks (radio network and the IMS network). The middle layer is the Control Layer 4, and at the top is the Application Layer 6.

The IMS 3 includes a core network 3a, which operates over the middle, Control Layer 4 and the Connectivity Layer 1, and a Service Network 3b. The IMS core network 3a includes nodes that send/receive signals to/from the GPRS network via the GGSN 2a at the Connectivity Layer 1 and network nodes that include Call/Session Control Functions (CSCFs) 5, which operate as SIP proxies within the IMS in the middle, Control Layer 4. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF. The top, Application Layer 6 includes the IMS service network 3b. Application Servers (AS) 7 are provided for implementing IMS service functionality

IMS is intended to deliver services such as multimedia telephony, IPTV, messaging, presence, push-to-talk etc. IMS is used to handle user authentication and authorization and other security functions, addressing and session establishment, end user charging and inter-operator accounting, service logic, correct quality of service, and inter operator inter-working. An IMS operator is typically a mobile, fixed or Internet access operator.

There are already a large number of Internet services based on an HTTP web based model. When user authentication and authorization is required it is performed on a per service basis. Websites that charge for services typically have a login option requiring their own set of user ids and passwords. Public key infrastructure (PKI) solutions exist which provide a mechanism to provide global authentication. An example of such a service is openID (see http://openid.net/). In order to charge user for a web-based service, the service provider may charge the customer's credit or debit card, or use an Internet payment service such as Pay-Pal^{™}. Alternatively, the provider may invoice the customer.

IMS networks are provided with means for performing user authentication, charging and accounting. IMS are evolving towards the Generic Authentication Architecture (GAA), see hftp://www.3gpp.org/ftp/Specs/html-info/33220.htm, for the pupose of authentication. This can only be used for services provided by the IMS operator or peer IMS operators, and not for non-IMS services, so an IMS user who wishes to obtain an internet service would need to authenticate themselves using the HTTP web based model described above.

The web-based model for user authentication and charging requires the user to enter a relationship with each provider that the user wishes to deal with. This introduces a hurdle for each potential deal. Each time the user wishes to obtain a service, he must make an assessment about whether to trust the service provider with financial data such as credit card details. Furthermore, there is the inconvenience of the procedures of handing ever a user id, password and payment details for each transaction. The inconvenience can be mitigated by using PKI, OpenID and payment services such as Pay-Pal. However, in cases where the IMS operator already has a business relationship with the customer in the form of a mobile, fixed or Internet access service, there is a potential of reducing the inconvenience to IMS customers in conducting transactions for services.

US 2006/089999 describes a method of charging for services, but can only work in the case where the network at which the user is registered has a trust relationship with the network in which the Server providing services is located. WO 03/105031 and US 2004/147245 would also not allow charging for services in the case where the network at which the user is registered does not have a trust relationship with the network in which the Server providing services is located.

### SUMMARY

IMS users conduct transactions with remote providers without a requirement for either the user or the remote provider to judge the other party's trustworthiness, or go through lengthy authentication procedures. The IMS operator is a payment service provider, which allows ordinary web-based services to be charged in the same way as IMS services such as premium rate access numbers or SMS services in fixed and mobile networks.

According to a first aspect of the invention, there is provided a method of charging for services in a SIP-based communication network. A Server that provides a service receives a first request message from a user, the request message including a user identifier used to register with the communication network. In response, the server sends the user a restricted address via which services can be obtained. The user sends a second request message to an intermediate network, the second request message including the restricted address. Note that the intermediate network has a trust relationship with the Server, and is an IMS network that has a trust relationship with a further IMS network at which the user is registered. The user identifier is authenticated at the intermediate network, which then sends to the Server a third request, the third request including an identity of the user and the restricted address. The Server sends a response message, which includes credentials that the user can use for obtaining the requested service from the restricted address. The intermediate network charges the user for the requested service, and sends the credentials to the user, thereby allowing the user to access the service. This allows the intermediate network to charge the user, without the user needing to establish a relationship with the Server.

In an optional embodiment, the communication network is a SIP-based communication network. As the intermediate network is an IMS network having a trusted relationship with a further IMS network at which the user is registered, the invention works with a Server even where the user's home network does not have a trust relationship with the Server. The IMS network and the further IMS network at which the user is registered optionally communicate via a broker operator.

As an option, the method comprises, in response to the first request, sending from the Server to the user charging information in addition to the restricted address, and using the charging information for charging the user.

In addition to authenticating the user, the method optionally includes performing a credit check relating to the user, to ensure that the user has sufficient funds to pay for the services from the Server.

The credentials sent from the Server optionally have a predetermined lifetime.

In an optional embodiment, the second request message is a SIP message, and the third request message is a Hypertext Transport Protocol (HTTP) message. However, as an alternative option, the second and the third request message are both HTTP messages.

According to a second aspect of the invention, there is provided a user device for use in a communication network. A first transmitter is provided for sending to a Server for providing services a first request message that includes a user identifier used to register with the communication network. A first receiver is also provided for receiving from the Server a first response message, which includes a restricted address via which the requested services can be obtained. A second transmitter is used for sending to an intermediate network node a second request, which includes the restricted address. The intermediate network node is located in an IMS network that has a trust relationship with a further IMS network at which the user is registered. A second receiver is provided for receiving from the intermediate network node a second response, which includes credentials authenticating the user identifier. A third transmitter is provided for sending a request for services to the restricted address, the request for services including the credentials that will show to the Server that the user has been charged for the services and can access the restricted area of the Server using the restricted address.

According to a third aspect of the invention, there is provided a Server for use in a communication network. A first receiver is provided for receiving a first request for services from a user, the request including a user identifier used to register with the communication network. A first transmitter is provided for sending a message to the user that includes a restricted address via which the services can be obtained. A second receiver is provided for receiving, from an intermediate network with which the Server has a trust relationship, a further request that includes an identity of the user, the restricted address, and an indication that the user identifier is authenticated by the intermediate network. The intermediate network node is located in an IMS network that has a trust relationship with a further IMS network at which the user is registered. A second transmitter is provided for sending a response message to the intermediate network, the response message including charging information and credentials usable for obtaining the requested service from the restricted address. A third receiver is provided for receiving a services request message from the user, the services request message including the restricted address and the credentials. A processor determines that the restricted address, the user identity and the credentials are valid. In the event that they are determined to be valid, the service is provided.

According to a third aspect of the invention, there is provided a node for use in an intermediate communication network that has a trust relationship with a further IMS network at which a user is registered. A first receiver is provided for receiving a request message from a user, the request message including a restricted address for a restricted area of a Server that has a trust relationship with the intermediate communication network. A first processor is provided for authenticating a user identifier associated with the user, and a first transmitter is provided for sending a third request to the Server, the third request including an identity of the user and the restricted address, and an indication that the user identifier is authenticated. A second receiver is provided for receiving a response message from the Server, the response message including credentials usable for obtaining the requested service from the restricted address. A charging function is provided for charging the user, and a second transmitter is provided for sending to the user the credentials usable for accessing services via the restricted address.

### BRIEF DESCRIPTION OF THE DRAWINGS

Figure 1 illustrates schematically in a block diagram an IMS network in association with a mobile network architecture of a General Packet Radio Service (GPRS) access network;
Figure 2 illustrates schematically in a block diagram a network architecture according to an embodiment of the invention;
Figure 3 is a signalling diagram illustrating the signalling between network nodes according to an embodiment of the invention;
Figure 4 is a flow diagram showing the steps of an embodiment of the invention;
Figure 5 illustrates schematically in a block diagram a user device according to an embodiment of the invention;
Figure 6 illustrates schematically in a block diagram a Server according to an embodiment of the invention; and
Figure 7 illustrates schematically in a block diagram an intermediate node according to an embodiment of the invention.

### DETAILED DESCRIPTION

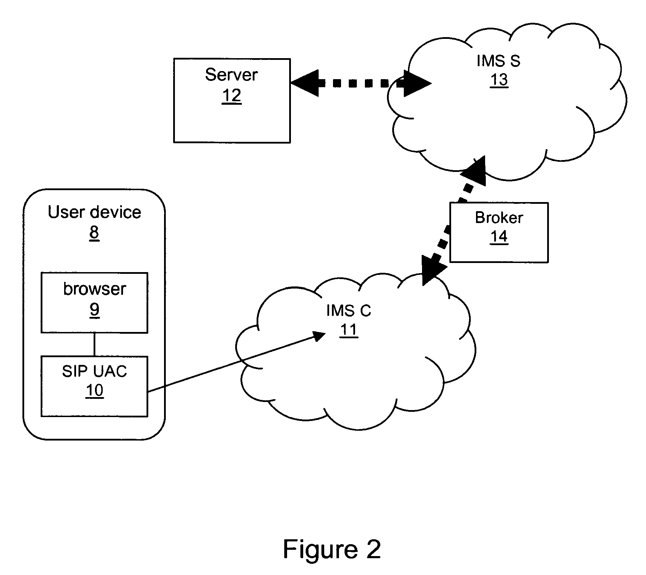

Referring to Figure 2, there is illustrated an end user device 8. This device may be any suitable device such as a personal computer or mobile device. The device 8 has a web browser 9 and an IMS enabled SIP User Agent Client (SIP UAC) 10 installed. The client 10 is registered as a user with IMS operator C 11. This means the client 10 and the operator 11 have agreed on the client's user id, password or equivalents in order for the operator 11 to authenticate the user and vice versa.

A service provider runs a server 12 that provides some type of service. The service provider has an agreement with IMS operator S 13. In this example, IMS operator C 11 and IMS operator S 13 are shown as two separate IMS operators, but the invention equally applies if IMS operator C and S are the same IMS operator. In this example, IMS operator C 11 and IMS operator S 13 are different operators, and an agreement is in place between them that defines how they trust each other and how to make accounting and payment settlements between each other, according to normal IMS procedures. In a likely scenario, IMS operator S 13 and C11 do not have a direct relationship, but instead inter-work via an I MS broker operator 14.

The service provider 12 and IMS operator S 13 have an agreement on how to trust each other. This can be by PKI methods, layer 3 firewalls or combinations thereof. They also have a business agreement defining charges for particular services.

Before the user device 8 can communicate with the service at server 12, the SIP UAC 10 registers with IMS C 11. This is necessary for the SIP UAC 10 to send SIP Invite messages to IMS C 11.

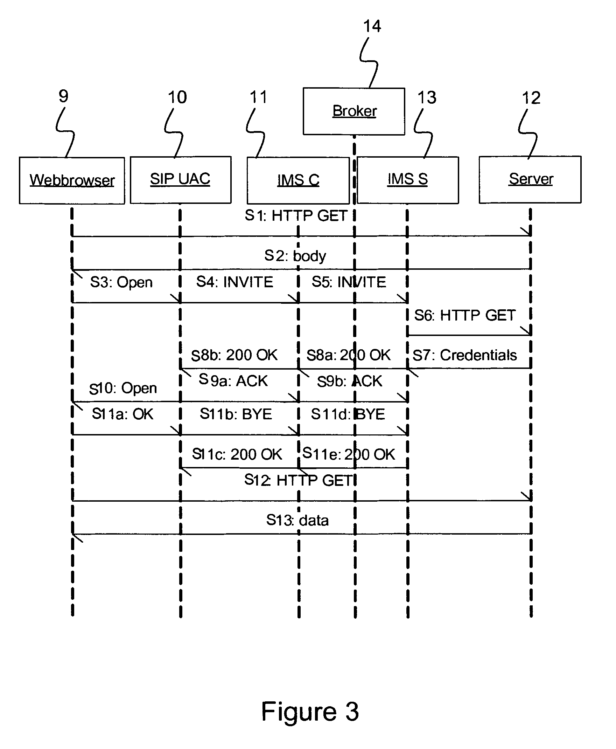

Referring now to Figure 3, there is illustrated a signalling diagram showing the signalling required to obtain a service for which a charge is made according to an embodiment of the invention. The following numbering corresponds to the numbering in Figure 3.

S1. The user uses his web browser 9 to visit the service provider's Server's 12 open area. The user selects an option to purchase services and therefore to access a restricted area of the Server 12.

S2. A MIME encoded body is sent from the Server 12 to the client's web browser 9. This body contains an address for the restricted area, an address for a credential retrieval point at which credentials to access the restricted area can be obtained, and an address for IMS network S 13.

S3. The MIME encoding is registered by the user's SIP UAC 10 to the user's web browser 9, so when a body of this type is received at the user's device 8, the body is passed to the SIP UAC 10.

S4. The SIP UAC 10 sends an INVITE message, addressed to IMS S 11, to IMS C 13 (the IMS network with which the user is registered). The invite contains the MIME body. The INVITE message is authenticated by IMS C 11 as being sent from the client 10 using normal IMS procedures. At this stage, credit control can be performed with the client's pre-paid account.

S5. IMS C 11 sends the INVITE message on to IMS S 13. The client's ID is now sent in a P-Asserted-Identity header of the INVITE message. Using normal IMS security arrangements, IMS S 13 trusts that the message comes from IMS C 11.

S6. IMS S 13 sends an HTTP or HTTPS request to the Server's 12 credential retrieval point. The request includes information relating to the client's 10 ID and the address of the requested restricted area. It also contains an indication of whether or not the credit control step S4 was successful. The Server 12 determines whether the user already has credentials from an earlier (revisited or failed) transaction. If this is the case, then the credentials can be delivered free of charge, and the transaction can be allowed even if the credit control in S4 failed. Otherwise the Server 12 performs an authorization based on the client's ID.

S7. The Server 12 returns a MIME body, containing a URL to the protected area, to IMS S 13. This URL includes credentials generated by the Server 12 and will be used in step S12 to authenticate the request to the protected area. The body also contains information that will be used by IMS S 13 to charge the user.

S8a. IMS S 13 sends the URL received in the body on to IMS C 11 in a SIP 200 OK message. IMS S 13 also includes charging information in the message. This charging information may be the same as that received from the Server 12, or it may be recalculated or remapped depending on agreements between I MS C 11 and S 13.

S8b. IMS C11 sends the URL including the credentials received in the body to the SIP UAC 10 in a SIP 200 OK message. IMS C 11 may include charging information in the message. This charging information may be the same as that received from IMS S 13, or it may be recalculated or remapped depending on agreements between IMS C 11 and the client 10.

S9a. The SIP UAC 10 sends an ACK to IMS C 11 to acknowledge that the URL (including the credentials) has been received.

S9b. IMS C 11 sends an ACK to IMS S 13 to acknowledge that the URL (including the credentials) has been received

S10. The SIP UAC 10 activates the client's web browser 9 using the received URL

S11a. The Web browser 9 is activated.

S11b. In order to conclude the SIP session, the SIP UAC 10 sends a BYE message to IMS C 11.

S11c. IMS C 11 terminates the SIP session and generates charging info using its charging system and sends a 200 OK to SIP UAC 10. IMS C 11 may also use contact information obtained from the client's user profile to notify the client's email address or SMS that a transaction has taken place. This message may include the URL (including the credentials)

S11d. IMS C 11 sends a BYE message to IMS S 13.

S11e. IMS S 13 terminates the SIP session and generates charging info using its charging system, and sends a 200 OK to IMS C 11.

S12. The user can now access the restricted area of the Server 12 directly using the web browser 9.

S13. As the user's web browser has provided the correct credentials, the Server 12 provides the requested service.

Note that IMS C 11 and IMS S 13 may interwork via a broker 14. In this case the signalling between IMS C 11 and IMS S 13 will pass through the broker 14, or the charging settlements can be performed by the broker.

Once the URL including the credentials has been delivered to the browser 9, communication can be performed directly between the browser 9 and Server 12, without any further involvement of the IMS operators,

The service provider decides a length of time for which the credentials will be valid. The policy that controls this may be located at the Server 12. Examples of policies are as follows:
- A music download service may provide a URL that entitles the client to download a specific file any number of times. Alternatively, a URL may be provided that allows the client to download the file only once.
- For on-line shopping with physical delivery, the service may yield a URL that entitles the client to check out of a shopping cart. The URL may include the cart along with the credentials
- On a "my pages" commercial site or social community server, the yielded URL may or may not be free of charge, and serves as "single-sign-on" token. This means that the IMS operator provides an authentication service, and the server can, via the URL, make sure that the user is who he claims to be.

The client can safely be charged after step S8 once I MS C 11 has received the URL. The reason for this is that after this step, the user can always get hold of the credentials again even if they where not successfully delivered to the web browser 9. The charging is therefore not dependent on trustworthy behaviour of software in the client's device 8.

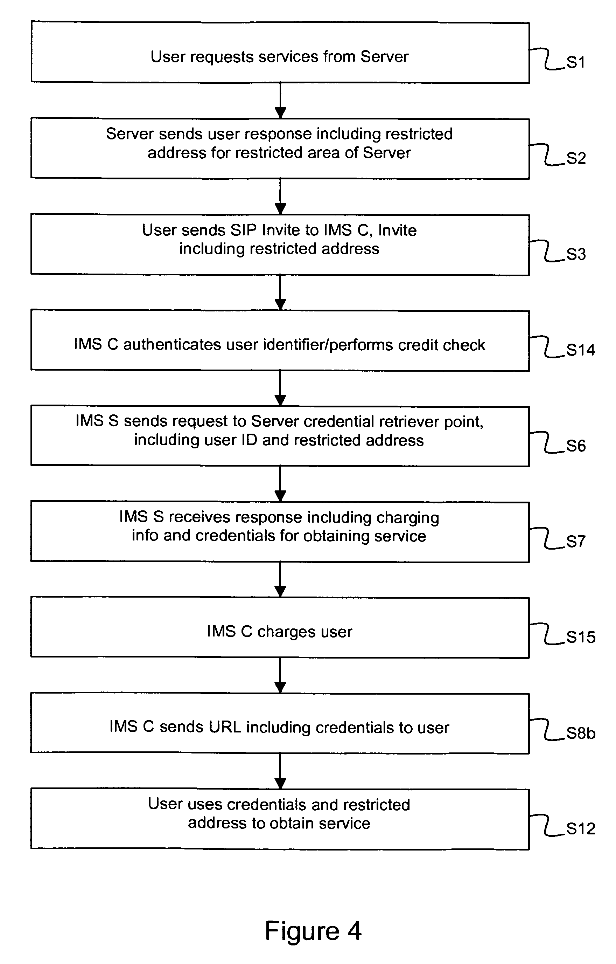

Turning now to Figure 4, there is shown a flow diagram illustrating the steps according to an embodiment of the invention. The following numbering corresponds to the steps shown in Figures 3 and 4:
S1. The user's web browser 9 sends a request for services from the Server 12, the request including an identifier for the user.
S2. The Server 12 responds to the web browser, the response including the address for a restricted area of the server from which the requested service can be obtained.
S3. The user's SIP UAC 10 sends SIP Invite to IMS C 11, the SIP Invite including the address for the restricted area and the user identifier.
S14. IMS C 11 authenticates the user identifier associated with the user. At this point IMS C 11 may also perform a credit check on the user.
S6. IMS S, which has a trust relationship with IMS C, sends a request to the Server's 12 credit retrieval point, the request including an ID for the user and the address for the restricted area. The request also includes an indication that the user identifier has been authenticated. IMS S and the Server have a trust relationship.
S7. The Server 12 replies with a message including charging information for the service and credentials for obtaining the requested service.
S15. IMS C charges the user.
S8b. IMS C sends the URL including the credentials to the user.
S12. The user now has the credentials for accessing the service, and the address for the restricted area. With this information, the user contacts the Server 12 to obtain the service.

Note that the above description assumes two IMS networks, although it is possible that the user's home network, IMS C 11, may have a trust relationship with the Server 12, in which case it may contact the Server 12 directly.

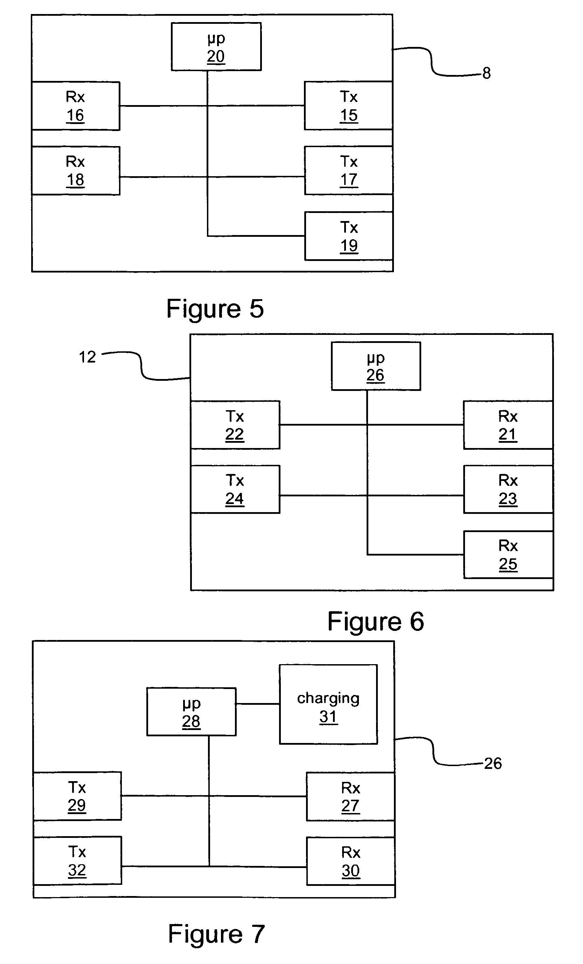

Turning now to Figure 5, a user device 8 is illustrated. The user device 8 is provided with a first transmitter 15 for sending to a request message to the Server 12, and a first receiver 16 for receiving a response from the Server, the response including the address for the restricted area via which the requested services can be obtained. A second transmitter 17 is provided for sending a SIP Invite including the restricted area address to IMS C11. A second receiver 18 is provided fro receiving a SIP 200 OK from IMS C 12, the SIP 200 OK including a URL and credentials authenticating the user. A third transmitter 19 is provided for sending a request for services to the restricted address of the Server 12, the request for services including the credentials. A processor 20 is provided for controlling the signalling. It will be appreciated that the receivers may be embodied in a single receiver, and the transmitters may be embodied in a single transmitter.

Referring to Figure 6, there is illustrated a Server 12 according to an embodiment of the invention. The Server 12 comprises a first receiver 21 for receiving a request from the user device 8 for services, and a first transmitter 22 for sending to the user 8 a response message that includes the address for the restricted area from which the services may be obtained. A second receiver 23 is provided for receiving from IMS S 13, a further request including an identity of the user, the restricted address, and an indication that the user identifier is authenticated by the intermediate network. A second transmitter 24 is provided for sending to IMS S 13 a response message, the response message including charging information and credentials usable for obtaining the requested service from the restricted address. A third receiver 25 is arranged to receive from the user device 8 a services request message. This message includes the restricted address and the credentials. A processor 26 is arranged to determine that the restricted address, the user identity and the credentials are valid, and in the event that they are determined to be valid, provide the requested service. It will be appreciated that the receivers may be embodied in a single receiver, and the transmitters may be embodied in a single transmitter.

Figure 7 illustrates a node 26 for use in a communication network. The node 26 is provided with a first receiver 27 for receiving from the user device 28 a request message that includes a restricted address for a restricted area of the Server 12. A first processor 28 is provided for authenticating the user identifier, and a first transmitter 29 is provided for sending to the Server 12 a request including an identity of the user and the restricted address, and an indication that the user identifier is authenticated. A second receiver 30 is provided for receiving from the Server 12 a response message. The response message includes charging information and credentials usable for obtaining the requested service from the restricted address. A charging function 31 is arranged to charge the user for according to the received charging information. A second transmitter 32 is provided for the credentials usable for accessing services via the restricted address to the user device 8. The various features of this node may be located in a single node, in a plurality of nodes, and even in a plurality of nodes located in different network, but the basic functionality remains the same.

The invention allows users to maintain a business relationship only with his own IMS operator, instead of with each service provider. There is therefore no need expose credit card details to new service providers, and no need to authorize new service providers to charge the user's credit card or payment service. Only one point of contact is required for complaints and liability issues. A further advantage of the invention is that the user requires only one single identity, authentication method and keys/password. The user has no need for separate user IDs and passwords for many servers. Furthermore, if the user maintains a pre-paid account with his IMS operator, then any potential losses due to fraud are minimized.

It will be appreciated by the person of skill in the art that various modifications may be made to the above-described embodiments without departing from the scope of the present invention. For example, the above description refers to an IMS network, whereas it will be apparent that the invention could be modified to work in any communication network that uses SIP-based signalling or Generic Authentication or Bootstrapping Architecture.

## Claims

1. A method of charging for services in a communication network, the method comprising:
at a Server providing a service, receiving (S1) a first request from a user for services, the request including a user identifier used to register with the communication network;
in response to the first request, sending (S2) to the user a restricted address via which services can be obtained;
the method **characterized by**, at the user device, sending (S3) a second request message to an intermediate network, the intermediate network being an IP Multimedia Subsystem network having a trusted relationship with a further IP Multimedia Subsystem network at which the user is registered, the second request message including the restricted address, the intermediate network having a trust relationship with the Server;
at the intermediate network, authenticating (S14) the user identifier;
sending (S6) from the intermediate network to the Server, a third request, the third request including an identity of the user and the restricted address;
receiving (S7) at the intermediate network from the server a response message, the response message including credentials usable for obtaining the requested service from the restricted address;
at the intermediate network, charging (S15) the user for the requested service; and
sending (S8b) to the user the credentials usable for accessing services via the restricted address.

2. The method according to claim 1, wherein the communication network is a Session Initiation Protocol-based communication network.

3. The method according to claim 1, wherein the IP Multimedia Subsystem network and the further IP Multimedia Subsystem network at which the user is registered communicate via a broker operator.

4. The method according to any one of claims 1 to 3, further comprising, in response to the first request, sending from the Server to the user charging information in addition to the restricted address, and using the charging information for charging the user.

5. The method according to any one of claims 1 to 4, comprising, in addition to authenticating the user, performing a credit check relating to the user.

6. The method according to any one of claims 1 to 5, wherein the credentials sent from the Server have a predetermined lifetime.

7. The method according to any one of claims 1 to 6, wherein the second request message is a Session Initiation Protocol message, and the third request message is a Hypertext Transport Protocol message.

8. The method according to any one of claims 1 to 7, wherein the second and the third request message are both Hypertext Transport Protocol messages.

9. A user device (8) for use in a communication network, the user device comprising:
a first transmitter (15) for sending to a Server (12) for providing services a first request message, the first request message including a user identifier used to register with the communication network;
a first receiver (16) for receiving from the Server a first response message, the response message including a restricted address via which the requested services can be obtained;
the user device **characterized by** a second transmitter (17) for sending to an intermediate network node a second request, the second request including the restricted address, the intermediate network node being located in an IP Multimedia Subsystem network having a trusted relationship with a further IP Multimedia Subsystem network at which the user is registered;
a second receiver (18) for receiving from the intermediate network node a second response, the second response including credentials authenticating the user identifier;
a third transmitter (19) for sending a request for services to the restricted address, the request for services including the credentials.

10. A Server (12) for use in a communication network, the Server comprising:
a first receiver (21) for receiving a first request from a user for services provided by the Server, the request including a user identifier used to register with the communication network;
a first transmitter (22) for sending to the user a message including a restricted address via which the services can be obtained;
the Server **characterized by** a second receiver (23) for receiving from an intermediate network with which the Server has a trust relationship, a further request including an identity of the user, the restricted address, and an indication that the user identifier is authenticated by the intermediate network, wherein the intermediate network is an IP Multimedia Subsystem network having a trusted relationship with a further IP Multimedia Subsystem network at which the user is registered;
a second transmitter (24) for sending a response message to the intermediate network, the response message including credentials usable for obtaining the requested service from the restricted address;
a third receiver (25) for receiving a services request message from the user, the services request message including the restricted address and the credentials;
a processor (26) for determining that the restricted address, the user identity and the credentials are valid, and in the event that they are determined to be valid, providing the service.

11. A node (26) for use in an intermediate communication network having a trusted relationship with a further IP Multimedia Subsystem network at which a user is registered, the node **characterized by** comprising:
a first receiver (27) for receiving from the user a request message, the request message including a restricted address for a restricted area of a Server, the Server having a trust relationship with the intermediate communication network;
a first processor (28) for authenticating a user identifier associated with the user;
a first transmitter (29) for sending to the Server a third request, the third request including an identity of the user and the restricted address, and an indication that the user identifier is authenticated;
a second receiver (30) for receiving from the Server a response message, the response message including charging information and credentials usable for obtaining the requested service from the restricted address;
a charging function (31) for charging the user according to the received charging information; and
a second transmitter (32) for sending to the user the credentials usable for accessing services via the restricted address.

## Patentansprüche

1. Verfahren zur Gebührenerhebung für Dienste in einem Kommunikationsnetzwerk, wobei das Verfahren umfasst:
in einem Server, der einen Dienst bereitstellt, erfolgendes Empfangen (S1) einer ersten Anforderung von Diensten von einem Benutzer, wobei die Anforderung eine Benutzerkennung einschließt, die verwendet wird, um sich beim Kommunikationsnetzwerk zu registrieren;
als Antwort auf die erste Anforderung erfolgendes Senden (S2) einer eingeschränkten Adresse an den Benutzer, über die Dienste erlangt werden können;
wobei das Verfahren **gekennzeichnet ist durch**: in der Benutzereinrichtung erfolgendes Senden (S3) einer zweiten Anforderungsnachricht an ein Zwischennetzwerk, wobei das Zwischennetzwerk ein IP-Multimediateilsystemnetzwerk ist, das eine gesicherte Beziehung mit einem weiteren IP-Multimediateilsystemnetzwerk hat, in dem der Benutzer registriert ist, wobei die zweite Anforderungsnachricht die eingeschränkte Adresse einschließt, wobei das Zwischennetzwerk eine gesicherte Beziehung mit dem Server hat;
im Zwischennetzwerk erfolgendes Authentifizieren (S14) der Benutzerkennung;
Senden (S6) einer dritten Anforderung vom Zwischennetzwerk an den Server, wobei die dritte Anforderung eine Identität des Benutzers und die eingeschränkte Adresse einschließt;
im Zwischennetzwerk erfolgendes Empfangen (S7) einer Antwortnachricht vom Server, wobei die Antwortnachricht Berechtigungsnachweise einschließt, die zum Erlangen des angeforderten Dienstes von der eingeschränkten Adresse verwendbar sind;
im Zwischennetzwerk erfolgendes Belasten (S15) des Benutzers für den angeforderten Dienst; und
Senden (S8b) der Berechtigungsnachweise, die zum Zugriff auf Dienste über die eingeschränkte Adresse verwendbar sind, an den Benutzer.

2. Verfahren nach Anspruch 1, worin das Kommunikationsnetzwerk ein auf dem Sitzungseinleitungsprotokoll beruhendes Kommunikationsnetzwerk ist.

3. Verfahren nach Anspruch 1, worin das IP-Multimediateilsystemnetzwerk und das weitere IP-Multimediateilsystemnetzwerk, bei dem der Benutzer registriert ist, über einen Makleroperator kommunizieren.

4. Verfahren nach einem der Ansprüche 1 bis 3, ferner umfassend: als Antwort auf die erste Anforderung erfolgendes Senden von Gebührenerhebungsinformation vom Server an den Benutzer, und zwar zusätzlich zur eingeschränkten Adresse, und Verwenden der Gebührenerhebungsinformation zum Belasten des Benutzers.

5. Verfahren nach einem der Ansprüche 1 bis 4, umfassend: zusätzlich zum Authentifizieren des Benutzers erfolgendes Durchführen einer Bonitätsprüfung in Bezug auf den Benutzer.

6. Verfahren nach einem der Ansprüche 1 bis 5, worin die vom Server gesendeten Berechtigungsnachweise eine vorbestimmte Lebensdauer haben.

7. Verfahren nach einem der Ansprüche 1 bis 6, worin die zweite Anforderungsnachricht eine Sitzungseinleitungsprotokoll-Nachricht ist und die dritte Anforderungsnachricht eine Hypertexttransportprotokoll-Nachricht ist.

8. Verfahren nach einem der Ansprüche 1 bis 7, worin sowohl die zweite als auch die dritte Anforderungsnachricht Hypertexttransportprotokoll-Nachrichten sind.

9. Benutzereinrichtung (8) zur Verwendung in einem Kommunikationsnetzwerk, wobei die Benutzereinrichtung umfasst:
einen ersten Sender (15) zum Senden einer ersten Anforderungsnachricht an einen Server (12) zum Bereitstellen von Diensten, wobei die erste Anforderungsnachricht eine Benutzerkennung einschließt, die verwendet wird, um sich beim Kommunikationsnetzwerk zu registrieren;
einen ersten Empfänger (16) zum Empfangen einer ersten Antwortnachricht vom Server, wobei die Antwortnachricht eine eingeschränkte Adresse einschließt, über welche die angeforderten Dienste erlangt werden können;
wobei die Benutzereinrichtung **gekennzeichnet ist durch**: einen zweiten Sender (17) zum Senden einer zweiten Anforderung an einen Zwischennetzwerkknoten, wobei die zweite Anforderung die eingeschränkte Adresse einschließt, wobei der Zwischennetzwerkknoten in einem IP-Multimediateilsystemnetzwerk angeordnet ist, das eine gesicherte Beziehung mit einem weiteren IP-Multimediateilsystemnetzwerk hat, in dem der Benutzer registriert ist;
einen zweiten Empfänger (18) zum Empfangen einer zweiten Antwort vom Zwischennetzwerkknoten, wobei die zweite Antwort Berechtigungsnachweise einschließt, welche die Benutzerkennung authentifizieren;
einen dritten Sender (19) zum Senden einer Anforderung von Diensten an die eingeschränkte Adresse, wobei die Anforderung von Diensten die Berechtigungsnachweise einschließt.

10. Server (12) zur Verwendung in einem Kommunikationsnetzwerk, wobei der Server umfasst:
einen ersten Empfänger (21) zum Empfangen einer ersten Anforderung von Diensten, die durch den Server bereitgestellt werden, von einem Benutzer, wobei die Anforderung eine Benutzerkennung einschließt, die verwendet wird, um sich beim Kommunikationsnetzwerk zu registrieren;
einen ersten Sender (22) zum Senden einer Nachricht an den Benutzer, die eine eingeschränkte Adresse einschließt, über welche die Dienste erlangt werden können;
wobei der Server **gekennzeichnet ist durch**: einen zweiten Empfänger (23), der dazu dient, von einem Zwischennetzwerk, mit dem der Server eine gesicherte Beziehung hat, eine weitere Anforderung zu empfangen, die eine Identität des Benutzers, die eingeschränkte Adresse und einen Hinweis, dass die Benutzerkennung **durch** das Zwischennetzwerk authentifiziert wurde, einschließt, wobei das Zwischennetzwerk ein IP-Multimediateilsystemnetzwerk ist, das eine gesicherte Beziehung mit einem weiteren IP-Multimediateilsystemnetzwerk hat, in dem der Benutzer registriert ist;
einen zweiten Sender (24) zum Senden einer Antwortnachricht an das Zwischennetzwerk, wobei die Antwortnachricht Berechtigungsnachweise einschließt, die zum Erlangen des angeforderten Dienstes von der eingeschränkten Adresse verwendbar sind;
einen dritten Empfänger (25) zum Empfangen einer Diensteanforderungsnachricht vom Benutzer, wobei die Diensteanforderungsnachricht die eingeschränkte Adresse und die Berechtigungsnachweise einschließt;
einen Prozessor (26) zum Bestimmen, dass die eingeschränkte Adresse, die Benutzerkennung und die Berechtigungsnachweise gültig sind, und falls sie als gültig bestimmt werden, Bereitstellen des Dienstes.

11. Knoten (26) zur Verwendung in einem Zwischen-Kommunikationsnetzwerk, das eine gesicherte Beziehung mit einem weiteren IP-Multimediateilsystemnetzwerk hat, in dem der Benutzer registriert ist, wobei der Knoten **dadurch gekennzeichnet ist, dass** er umfasst:
einen ersten Empfänger (27) zum Empfangen einer Anforderungsnachricht vom Benutzer, wobei die Anforderungsnachricht eine eingeschränkte Adresse für einen eingeschränkten Bereich eines Servers einschließt, wobei der Server eine gesicherte Beziehung mit dem Zwischen-Kommunikationsnetzwerk hat;
einen ersten Prozessor (28) zum Authentifizieren einer Benutzerkennung, die dem Benutzer zugeordnet ist;
einen ersten Sender (29) zum Senden einer dritten Anforderung an den Server, wobei die dritte Anforderung eine Identität des Benutzers und die eingeschränkte Adresse und einen Hinweis, dass die Benutzerkennung authentifiziert ist, einschließt;
einen zweiten Empfänger (30) zum Empfangen einer Antwortnachricht vom Server, wobei die Antwortnachricht Gebührenerhebungsinformation und Berechtigungsnachweise, die zum Erlangen des angeforderten Dienstes von der eingeschränkten Adresse verwendbar sind, einschließt;
eine Gebührenerhebungsfunktion (31) zum Belasten des Benutzers gemäß der empfangenen Gebührenerhebungsinformation; und
einen zweiten Sender (32) zum Senden der Berechtigungsnachweise, die zum Zugriff auf Dienste über die eingeschränkte Adresse verwendbar sind, an den Benutzer.

## Revendications

1. Procédé de facturation de services dans un réseau de communication, le procédé comprenant les étapes ci-dessous consistant à :
au niveau d'un serveur fournissant un service, recevoir (S1) une première demande provenant d'un utilisateur de services, la demande comprenant un identifiant d'utilisateur utilisé pour s'enregistrer auprès du réseau de communication ;
en réponse à la première demande, envoyer (S2) à l'utilisateur une adresse limitée, par l'intermédiaire de laquelle des services peuvent être obtenus ;
le procédé étant **caractérisé par** les étapes ci-après consistant à, au niveau du dispositif d'utilisateur, envoyer (S3) un deuxième message de demande à un réseau intermédiaire, le réseau intermédiaire étant un réseau de sous-système multimédia IP présentant une relation de confiance avec un réseau de sous-système multimédia IP supplémentaire au niveau duquel l'utilisateur est enregistré, le deuxième message de demande incluant l'adresse limitée, et le réseau intermédiaire présentant une relation de confiance avec le serveur ;
au niveau du réseau intermédiaire, authentifier (S 14) l'identifiant d'utilisateur ;
envoyer (S6), du réseau intermédiaire au serveur, une troisième demande, la troisième demande comprenant une identité de l'utilisateur et l'adresse limitée ;
recevoir (S7), au niveau du réseau intermédiaire, à partir du serveur, un message de réponse, le message de réponse incluant des justificatifs d'identité utilisables pour obtenir le service requis à partir de l'adresse limitée ;
au niveau du réseau intermédiaire, facturer (S15) l'utilisateur pour le service requis ; et
envoyer (S8b) à l'utilisateur les justificatifs d'identité utilisables pour accéder aux services via l'adresse limitée.

2. Procédé selon la revendication 1, dans lequel le réseau de communication est un réseau de communication basé sur un protocole d'ouverture de session.

3. Procédé selon la revendication 1, dans lequel le réseau de sous-système multimédia IP et le réseau de sous-système multimédia IP supplémentaire auprès duquel l'utilisateur est enregistré communiquent par l'intermédiaire d'un courtier.

4. Procédé selon l'une quelconque des revendications 1 à 3, comprenant en outre les étapes consistant à, en réponse à la première demande, envoyer, du serveur à l'utilisateur, des informations de facturation, outre l'adresse limitée, et utiliser les informations de facturation pour facturer l'utilisateur.

5. Procédé selon l'une quelconque des revendications 1 à 4, comprenant l'étape consistant à, outre l'authentification de l'utilisateur, mettre en oeuvre une vérification de crédit relative à l'utilisateur.

6. Procédé selon l'une quelconque des revendications 1 à 5, dans lequel les justificatifs d'identité envoyés à partir du serveur présentent une durée de vie prédéterminée.

7. Procédé selon l'une quelconque des revendications 1 à 6, dans lequel le deuxième message de demande est un message de protocole d'ouverture de session, et le troisième message de demande est un message de protocole de transport hypertexte.

8. Procédé selon l'une quelconque des revendications 1 à 7, dans lequel les deuxième et troisième messages de demande sont des messages de protocole de transport hypertexte.

9. Dispositif d'utilisateur (8) destiné à être utilisé dans un réseau de communication, le dispositif d'utilisateur comprenant :
un premier émetteur (15) pour envoyer à un serveur (12), dans le but de fournir des services, un premier message de demande, le premier message de demande comprenant un identifiant d'utilisateur utilisé pour s'enregistrer auprès du réseau de communication ;
un premier récepteur (16) pour recevoir, du serveur, un premier message de réponse, le message de réponse comprenant une adresse limitée, par l'intermédiaire de laquelle les services requis peuvent être obtenus ;
le dispositif d'utilisateur étant **caractérisé par** un deuxième émetteur (17) pour envoyer, à un noeud de réseau intermédiaire, une deuxième demande, la deuxième demande incluant l'adresse limitée, le noeud de réseau intermédiaire étant situé dans un réseau de sous-système multimédia IP présentant une relation de confiance avec un réseau de sous-système multimédia IP supplémentaire auprès duquel l'utilisateur est enregistré ;
un deuxième récepteur (18) pour recevoir, à partir du noeud de réseau intermédiaire, une seconde réponse, la seconde réponse comprenant des justificatifs d'identité authentifiant l'identifiant d'utilisateur ;
un troisième émetteur (19) pour envoyer une demande de services à l'adresse limitée, la demande de services incluant les justificatifs d'identité.

10. Serveur (12) destiné à être utilisé dans un réseau de communication, le serveur comprenant :
un premier récepteur (21) pour recevoir une première demande provenant d'un utilisateur, pour des services fournis par le serveur, la demande comprenant un identifiant d'utilisateur utilisé pour s'enregistrer auprès du réseau de communication ;
un premier émetteur (22) pour envoyer, à l'utilisateur, un message comprenant une adresse limitée, par l'intermédiaire de laquelle les services peuvent être obtenus ;
le serveur étant **caractérisé par** un deuxième récepteur (23) pour recevoir, à partir d'un réseau intermédiaire avec lequel le serveur présente une relation de confiance, une demande supplémentaire comprenant une identité de l'utilisateur, l'adresse limitée, et une indication selon laquelle l'identifiant d'utilisateur est authentifié par le réseau intermédiaire, dans lequel le réseau intermédiaire est un réseau de sous-système multimédia IP présentant une relation de confiance avec un réseau de sous-système multimédia IP supplémentaire auprès duquel l'utilisateur est enregistré ;
un deuxième émetteur (24) pour envoyer un message de réponse au réseau intermédiaire, le message de réponse comprenant des justificatifs d'identité utilisables pour obtenir des services requis à partir de l'adresse limitée ;
un troisième récepteur (25) pour recevoir un message de demande de services en provenance de l'utilisateur, le message de demande de services comprenant l'adresse limitée et les justificatifs d'identité ;
un processeur (26) pour déterminer que l'adresse limitée, l'identité de l'utilisateur et les justificatifs d'identité sont valides, et dans le cas où ces éléments sont déterminés comme valides, pour fournir le service.

11. Noeud (26) destiné à être utilisé dans un réseau de communication intermédiaire présentant une relation de confiance avec un réseau de sous-système multimédia IP supplémentaire auprès duquel un utilisateur est enregistré, le noeud étant **caractérisé en ce qu'**il comprend :
un premier récepteur (27) pour recevoir, à partir de l'utilisateur, un message de demande, le message de demande comprenant une adresse limitée pour une zone limitée d'un serveur, le serveur présentant une relation de confiance avec le réseau de communication intermédiaire ;
un premier processeur (28) pour authentifier un identifiant d'utilisateur associé à l'utilisateur ;
un premier émetteur (29) pour envoyer au serveur une troisième demande, la troisième demande comprenant une identité de l'utilisateur et l'adresse limitée, et une indication selon laquelle l'identifiant d'utilisateur est authentifié ;
un deuxième récepteur (30) pour recevoir, à partir du serveur, un message de réponse, le message de réponse comprenant des informations de facturation et des justificatifs d'identité utilisables pour obtenir le service requis à partir de l'adresse limitée ;
une fonction de facturation (31) pour facturer l'utilisateur selon les informations de facturation reçues ;
un deuxième émetteur (32) pour envoyer à l'utilisateur les justificatifs d'identité utilisables pour accéder à des services via l'adresse limitée.
